# EUROPEAN PATENT SPECIFICATION

(11) **EP 2 751 466 B1**
(45) Date of publication and mention of the grant of the patent: **12.12.2018**
(21) Application number: 12828935.2
(22) Date of filing: 29.08.2012
(51) Int. Cl.: F16L 29/00, B65D 47/06, B65D 47/10, B65D 33/38, B67D 3/00

(54) **ASEPTIC DUCKBILL FLIP-CAP FITMENT FOR A COLLAPSIBLE BAG AND PROCESS FOR FILLING A COLLAPSIBLE BAG**
ASEPTISCHER EINKLAPPBARER ENTENSCHNABELEINSATZ FÜR EINEN ZUSAMMENKLAPPBAREN BEUTEL UND VERFAHREN ZUM FÜLLEN EINES ZUSAMMENKLAPPBAREN BEUTELS
CLOISON À CAPUCHON-PRESSION À BEC DE CANARD ASEPTIQUE POUR UN SAC PLIABLE ET PROCÉDÉ POUR LE REMPLISSAGE D'UN SAC PLIABLE

(30) Priority: 29.08.2011 US 201161528508 P
(43) Date of publication of application: 09.07.2014
(73) Proprietor: Liqui-Box Corporation, Worthington, OH 43085-0494 (US)
(72) Inventor: JOHNSON, James, Delaware, Ohio 43015 (US)
(74) Representative: Petraz, Davide Luigi
(86) International application number: PCT/US2012/052754
(87) International publication number: WO 2013/033135

(56) References cited:
- WO-A1-2005/012129
- WO-A1-2008/025145
- WO-A1-2010/066926
- WO-A1-2010/080897
- WO-A1-2010/080897
- JP-A- 2002 160 730
- JP-U- H01 137 873
- US-A- 5 010 925
- US-A1- 2007 131 725
- US-A1- 2009 120 899

## Description

### FIELD OF THE INVENTION

The present disclosure relates to a fitment and its use with a collapsible container for dispensing liquids or semi-solids from said container. More particularly, the present disclosure relates to a fitment comprising a duckbill flip-cap for use on a collapsible container to dispense liquids and semi-solids from the container, wherein said duckbill flip-cap fitment forms an aseptic seal with the spout on said collapsible container.

### BACKGROUND

Many systems dispense liquids or semi-solids from a disposable package consisting of a flexible collapsible bag in a corrugated box. Such a package is commonly referred to as a bag-in-box dispensing package. Generally, these systems include a bag that is provided with a fitment in the form of a spout through which filling and dispensing occur. It is generally desirable to provide a quick-disconnect coupling between the spout and the service line of the pump or other type of beverage mixing and dispensing system.

However, these closures often employ complicated sealing structures to provide an adequate seal to prevent a product spill. In the past, elastomeric check-valves and O-ring seals have been employed. Furthermore, because the assembly requires multiple parts, it renders these closure valves non-cost-effective.

Typically, these fluid couplings use connections such as an insert, and/or cap, connected with a fluid source, such as a bag or bag-in-box. The insert is coupled with a connector or coupler body that can access a fluid dispensing system such as a fluid line. Many connectors employ a piercing member at one end to puncture a membrane seal disposed on the insert when the connector is mated with the insert for fluid dispensing. Further, such connectors used to mate with the insert on the fluid source are produced so as to be reusable.

In addition, the industry needs coupling valve assemblies that can be reused with various connections. The present invention addresses this need and provides a non-disposable coupling-valve assembly that can be utilized with various fluid conduit adaptors.

Commercial and industrial applications routinely employ disposable containers to transport and dispense a variety of liquids or fluids such as food products, cleaning solutions and detergents. Some containers are constructed of semi-rigid plastic while others are constructed of flexible plastic and are often supported within a protective box.

Commonly, such containers are equipped with valve structures that facilitate dispensing fluids to or from the containers. The valve structures are preferably designed to quickly couple with exterior coupling members.

The female coupling includes a releasable locking or quick-connecting/disconnecting mechanism for locking the male and female couplings together in a coupled state. U.S. Pat. No. 4,436,125 discloses a quick-connect/disconnect coupling assembly. A female coupling member includes a poppet valve assembly that automatically shuts off the fluid passageway in the female coupling member when the female coupling member is not interconnected to the male coupling member.

Document WO-A-2010/080897 discloses a fitment for use on a collapsible bag for dispensing of liquids and semi-solids from the bag according to the preamble of claims 1 and 12.

### SUMMARY OF THE INVENTION

One aspect of the present invention defined in claim 1 is a fitment for use on a collapsible bag for dispensing of liquids and semi-solids from the bag, the fitment comprising:
(a) a spout comprising a generally hollow cylindrical body having an external surface capable of mating with an aseptic flip-cap, the spout having at one end, a base portion for securing the spout to the collapsible bag;
(b) a flip-cap having an outer collar and an inner collar with the outer collar and the inner collar each having an inner and outer surface, the inner surface of the outer collar and the outer surface of the inner collar forming a cavity adapted to be removably attachable to the spout creating an aseptic seal with an inner wall of the spout, the inner surface of the inner collar being capable of attaching to a cap duckbill, the flip-cap further comprising a hollow cylinder section comprising a proximal end and a distal end with each having an inner and outer surface, the hollow cylinder section being fixedly attached at its distal end to the inner collar, the inner surface of the inner collar and the outer surface of the proximal end of the cylinder section forming a cavity, the flip-cap optionally comprising a flange fixedly attached to the outer surface of the outer collar;
   wherein the outer surface of said inner collar comprises a first sealing ring having a flat surface, and a second sealing ring having a curved surface, wherein said sealing rings protrude outwardly exerting a force on the inner wall of the spout to create said aseptic seal such that said flip-cap is an aseptic flip-cap;
(c) a slidably removable probe; and
(d) a substantially hollow cap duckbill adapted to mate with the proximal end of the hollow cylinder section of the aseptic flip-cap and which forms a seal within the fitment that can be unsealed by insertion of the probe into the fitment through the hollow cylinder section of the aseptic flip-cap, the cap duckbill having a tapered end and an ejection end, the tapered end having dome with a reversibly sealable slit capable of preventing fluid flow through the aseptic flip-cap upon removal of the probe from the fitment.

Another aspect of this invention is a fitment according to claim 12.

This invention also relates to a process for filling an unfilled collapsible bag for dispensing of liquids and semi-solids from said collapsible bag, comprising a fitment as recited above, comprising:
(a) introducing said unfilled collapsible bag into a filling chamber under aseptic conditions;
(b) dismounting said aseptic flip-cap from said spout on said unfilled collapsible bag under aseptic conditions;
(c) filling said unfilled collapsible bag with material for dispensation;
(d) re-mounting said aseptic flip-cap on said spout; and
(e) closing the aseptic flip-cap.

Other objects and advantages will become apparent to those skilled in the art upon reference to the detailed description that hereinafter follows.

### BRIEF DESCRIPTION OF THE FIGURES

FIG. 1 is a bottom view of an exploded assembly of the fitment.
FIG. 2 is a top view of an exploded assembly of the fitment.
FIG. 3 is a side view of an exploded assembly of the fitment.
FIG. 4 is a cross sectional view of the assembly of the fitment taken at line A-A of FIG. 3.
FIG. 5 is a cross sectional view of the aseptic flip-cap fitment.
FIG. 6 is a perspective of the cross sectional view of the aseptic flip-cap fitment mounted on the spout.
FIG. 7 is a magnified view of the sealing rings and inner collar in cross section view of the aseptic flip-cap fitment.
FIG. 8 is a magnified view of a cross section of the aseptic flip-cap showing sealing rings on the outside wall of the aseptic flip-cap.
FIG. 9 is a magnified view of a cross section of the aseptic flip-cap having sealing rings mounted on the spout.
FIG. 10 is a magnified view of a cross section of the aseptic flip-cap not having sealing rings thereon.
FIG. 11 is a magnified view of a cross section of the aseptic flip-cap not having sealing rings thereon mounted on a spout having sealing rings on the inner wall of the spout.

### DETAILED DESCRIPTION OF THE INVENTION

When an amount, concentration, or other value or parameter is given as either a range, preferred range, or a list of upper preferable values and lower preferable values, this is to be understood as specifically disclosing all ranges formed from any pair of any upper range limit or preferred value and any lower range limit or preferred value, regardless of whether ranges are separately disclosed. Where a range of numerical values is recited herein, unless otherwise stated, the range is intended to include the endpoints thereof, and all integers and fractions within the range. It is not intended that the scope of the invention be limited to the specific values recited when defining a range.

### Definitions

In the context of this disclosure, a number of terms shall be utilized.

As used herein, the term "about" or "approximately" means within 20%, preferably within 10%, and more preferably within 5% of a given value or range.

The term "comprising" is intended to include embodiments encompassed by the terms "consisting essentially of' and "consisting of'. Similarly, the term "consisting essentially of' is intended to include embodiments encompassed by the term "consisting of."

### Fitment

The aseptic fitment of the present invention is attached to a liquid container, which usually is a flexible bag of a plastic material or a semi-rigid container, also of a plastic material, that holds liquids or semi-solids that are to be dispensed. The fitment can be tailored to the size of the bag or container so that a desired level of flow can be achieved. A wide variety of liquids or semi-solids can be dispensed using the fitment, such as liquid foods, for example, coffee, soda, milk, cooking oil, or liquid chemicals of various types, such as, detergents, cleaning liquids, hand soap, pastes, glue.

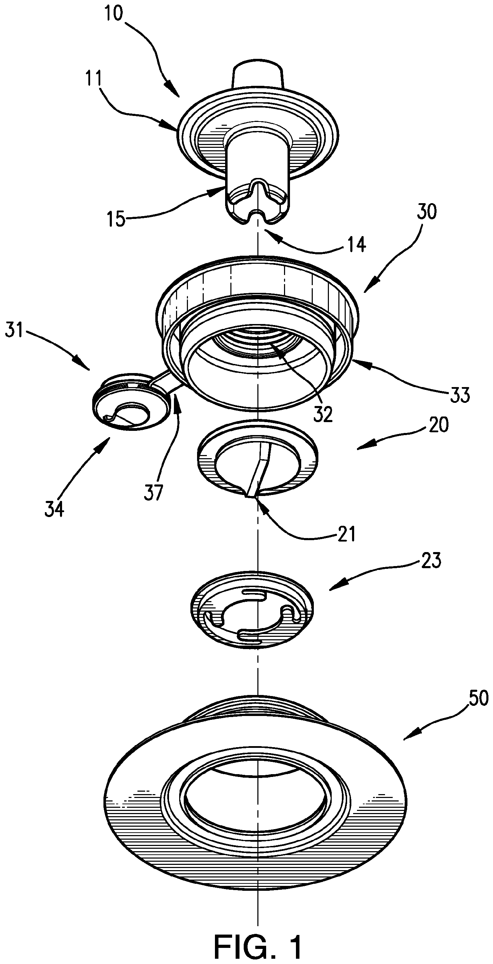

**FIG. 1** shows an exploded bottom view of the fitment assembly of this invention. A probe **10** is fitted into an aseptic flip-cap **30** having a flip lid **31** with a pull tab **34**. Cap duckbill **20** is positioned in the bottom of the aseptic flip-cap **30**. A duckbill lock ring **23** is positioned between the cap duckbill **20** and the spout **50.** Upon engagement of the cap duckbill **20** with the duckbill lock ring **23** and the spout **50**, the duckbill lock ring **23** locks into aseptic flip-cap **30** and holds the duckbill product flow opening **21** in the cap duckbill **20**, closed, and prevents seepage or leakage of liquid that is to be dispensed from the bag or container (not shown) to which spout **50** is attached. Extended periods of holding the liquid container at cold temperatures can cause distortion of the cap duckbill **20** thereby allowing liquid to seep through the flow opening **21.** The use of the duckbill locking ring **23** generally prevents such seepage. The present invention, however, provides an additional mechanism to seal the collapsible

container (not shown), that is, providing an aseptic flip-cap **30** that engages the spout **50** in such fashion that the seal between the fitment and the spout **50** is aseptic. Probe **10** through which material from the bag or container is dispensed, typically is a molded thermoplastic material usually a polyolefin, such as, polyethylene, copolymers and terpolymers of polyethylene, polypropylene, copolymers and terpolymers of polypropylene, polybutylene and copolymers and terpolymers thereof, fluorocarbon polymers and copolymers thereof, polyvinyl chloride and copolymers thereof, polyvinylidene chloride and fluorocarbon polymers and copolymers thereof. Thermosetting polymers such as epoxy resins, phenolic resins, melamine resins can also be used for dispersing some substances. Preferably, polyethylene, polypropylene and copolymers and terpolymers thereof are used for most applications.

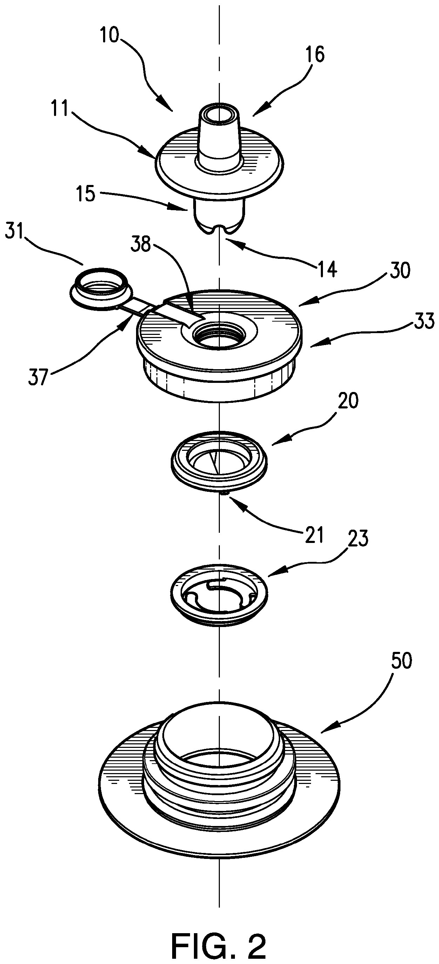

**FIG. 2** shows a top view of an exploded assembly of the fitment of this invention. Probe **10** is fitted into an inner circular opening or hollow cylinder section **32** of aseptic flip-cap **30** having flip lid **31** attached thereto by hinge **37**. Hinge **37** fits into the recessed area **38** of cap **30** allowing flip lid **31** to recess into the hollow cylinder section **32** of aseptic flip-cap **30** (shown in **FIG. 1**) thereby providing a level and even surface to the top of aseptic flip-cap **30** when flip lid **31** is in a closed position. Duckbill lock ring **23** is positioned between cap duckbill **20** and the top of spout **50** and locks into cap **30.**

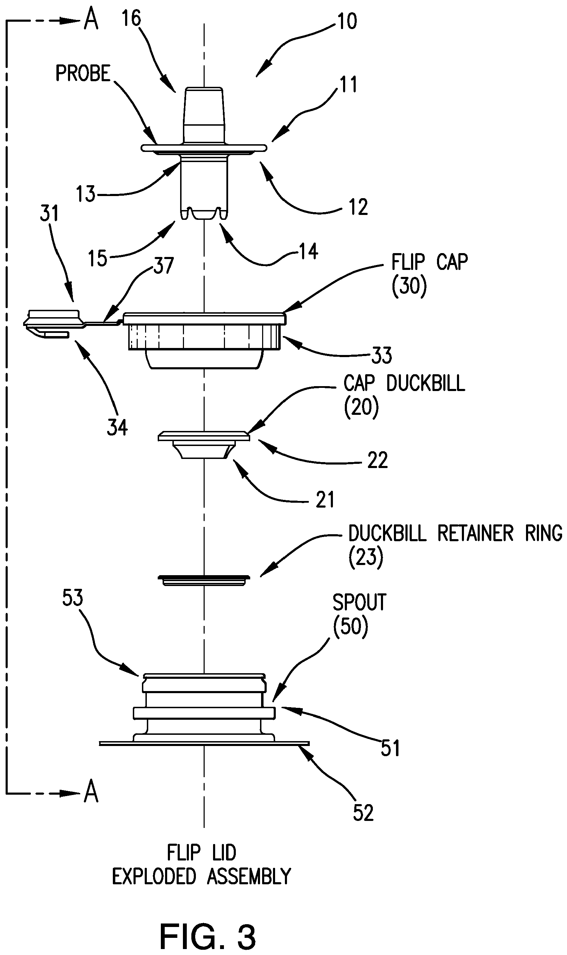

**FIG. 3** shows a side view of an exploded assembly of the fitment of **FIG. 1**. The probe **10**, which typically is a molded plastic part, has a nozzle **16** and a flange **11** molded to the nozzle **16** that presses against the aseptic flip-cap **30**. The flange **11** is reinforced with a flange-strengthening rib **12**. A locking bead **13** is molded to flange strengthening rib **12** of the probe **10**. The locking bead **13** of the probe **10** is attached to the aseptic flip-cap **30** and forms a seal with the aseptic flip-cap **30**. Probe lead-in **15**, preferably having at least two more, and preferably four, product flow slots **14** through which product flows from bag, engages and forms a seal with the hollow cylinder section **32** of the aseptic flip-cap **30**. (Also see **FIG. 1** and **FIG. 2**). The probe lead-in **15** need not have these product flow slots **14** and still be operative and allow for flow of fluid from the bag or container.

In one embodiment, the total length of the probe **10** is about 2.54 to 5.08 cm (1 to 2 inches), typically 3.56 cm (1.4 inches), and the nozzle **16** of the probe **10** is about 1.91 cm (0.75 inches). In another embodiment, the outer diameter of the nozzle **16** of the probe is about 1.27 cm (0.5 inches). In yet another embodiment, the diameter of the flange **11** that presses against the aseptic flip-cap 30 depends on the width of the cap but typically is about 3.366 cm (1.325 inches). In another embodiment, typically, the thickness of the wall of the probe **10** is about 0.241 cm (0.095 inch) in the nozzle section and about 0.127 cm (0.05 inch) at the seal at the edge of the flange **11**. The above dimensions can vary depending on the liquid being dispensed.

In one embodiment, the inner diameter of the nozzle **16** of the probe **10** is about 0.64 cm (0.25 inch) and a variety of hoses typically can be attached to the nozzle **16**. Typically, the hoses are attached to the nozzle **16** by a friction fit of the hose to the nozzle; however, other methods also can be used, such as, a hose clamp or the exterior of the nozzle may be provided with ribs or with a roughened surface for a better friction fit.

In one embodiment, the cap duckbill **20** is a molded elastomeric product or a soft flexible plastic material having a duckbill product flow opening **21**. (See **FIG. 1** also.) The duckbill seal **22** is fitted into the bottom of the probe **10** and engages with the inner wall of the nozzle **16**. The duckbill product flow opening **21** (illustrated in **FIG. 1** in a closed position) of the cap duckbill **20** typically is a re-closable opening, such as a slit in the cap duckbill **20** that allows fluid to flow from the bag or container upon engagement of the probe **10** by application of a downward force applied to the duckbill **20.** As pointed out above, the duckbill lock ring **23** prevents seepage of liquid through the product flow opening **21** until there is engagement by the probe **10**. The product flow opening **21** of the cap duckbill **20** can be molded in such a manner that it would be broken open on engagement of probe **10**. In the alternative, the product flow opening **21** can be sealed with a thin layer of material that is broken on engagement of the probe **10**, or the opening itself can be sealed but breakable on engagement of the probe **10** and then re-sealable when the probe is disengaged. The duckbill seal **22** fits into aseptic flip-cap **30** and forms a seal with hollow cylinder section **32** of the aseptic flip-cap **30**. Optionally, the duckbill seal **22** can be permanently attached to the aseptic flip-cap **30** by welding or heat sealing it to the aseptic flip-cap **30**.

The primary advantage of the use of the cap duckbill **20** is to prevent back flow from the bag or container through the aseptic flip-cap **30** when the probe **10** is not engaged and the hose attached to the probe **10** is removed. The cap duckbill shape as shown in **FIG. 1** is preferred but other shapes can be used that would provide the same function. Typically, the length of the cap duckbill **20** is from about 0.95 to 2.54 cm (0.375 to 1.000 inch) and the width about 0.76 cm (0.3 inch), but these dimensions may vary depending on the design of the fitment.

The cap duckbill **20** is molded from an elastomeric material or a soft flexible plastic material that can withstand the effects of the fluid being dispensed. Typically useful elastomers are styrene/butadiene copolymers, butyl rubbers, polysulfide rubbers, polyisoprene, ethylene-propylene terpolymers (EPDM rubber), silicone rubbers, polyurethane rubbers, and the like. A soft flexible plastic material can also be used such a linear low molecular weight polyethylene or copolymers and blends thereof. The duckbill lock ring **23** also can be molded from any of the above materials, preferably, a plastic material, such as high density polyethylene or high density polypropylene.

In one embodiment, the aseptic flip-cap **30** is a molded plastic part preferably formed of polyethylene but any of the aforementioned thermoplastics can be used. The aseptic flip-cap **30** has attached to it a flip lid **31** by hinge **37**, which can be moved and engaged with the opening of the aseptic flip-cap **30** and forms a seal to retain liquid in the bag or container when the probe **10** is not inserted into or when it is removed from the opening of the aseptic flip-cap **30**. Also, a seal of a thin film of plastic, coated paper, metal foil and the like can be sealed over the hollow cylinder section **32** of the flip-cap to keep liquid product in the container or bag fresh and prevent spoilage. This seal can readily be removed, broken, or punctured at the time when product is to be removed from the container or bag. A pull tab **34** is molded to the flip lid **31** for easy opening and closing of the flip lid **31**. The aseptic flip-cap **30** has a handling flange **33** for holding the aseptic flip-cap **30** while it is being moved over the spout **50** or removed there-from. The interior of the aseptic flip-cap **30** fits over the sealing bead(s) **53** of the spout **50** to form liquid tight seal with the spout **50**. The spout **50** also has a sealing flange **52** molded thereto and forms a liquid tight seal with the bag or container (not shown) when attached thereto.

The flip lid **31** of the aseptic flip-cap **30** is an optional feature and can be eliminated in particular when a seal is positioned over the hollow cylinder section **32** of the cap **30** and when the fitment is used only for an initial installation and the bag or container is not subsequently removed or closed after disengagement of the probe **10**.

Another optional feature is that the hinge **37** of the flip lid **31** can be recessed into a slot or recessed area **38** in the aseptic flip-cap **30** to form a even surface on the flip lid **30**. The recessed area **38** in the aseptic flip-cap **30** is of a sufficient depth so that the flip lid **31** and the pull tab **34** are also recessed in the aseptic flip-cap **30**.

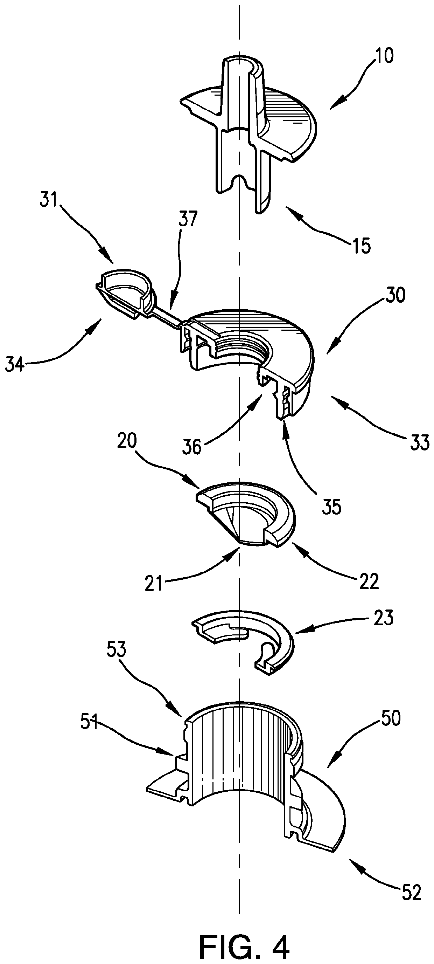

**FIG. 4**, which is a cross sectional view of the assembly of the fitment (taken at line **A-A'** in **FIG. 3**) shows the positioning of the cap duckbill **20** in the aseptic flip-cap **30** and the aseptic flip-cap **30** onto the spout **50**. The aseptic flip-cap **30** has two U-shaped collar openings: **35**, which is the outer opening, and **36**, which is the inner opening. The duckbill seal **22** of the cap duckbill **20** fits into the U-shaped collar opening **36** of the cap duckbill **20** and forms a seal. When the probe lead-in **15** of the probe **10** engages with the cap duckbill **20,** the flow opening **21** of the cap duckbill **20** is forced open and fluid is allowed to flow. Similarly, when the probe **10** is disengaged, the flow opening **21** closes and seals and prevents further flow of any fluid from the bag. Duckbill lock ring **23** holds the flow opening **21** of the cap duckbill **20** closed until the probe **10** engages the cap duckbill **20** to allow flow of liquid and the top ring of the duckbill lock ring **23** fits into the inner opening **36** of the aseptic flip-cap **30** and forms a seal with the aseptic flip-cap **30**.

As illustrated in the **FIG. 4**, the aseptic flip-cap **30** fits over the spout **50.** The proximal end of the spout **50** fits into the outer U-shaped collar opening **35** of the aseptic flip-cap **30** and a seal is formed with the spout seal beads **53** of the spout **50**.

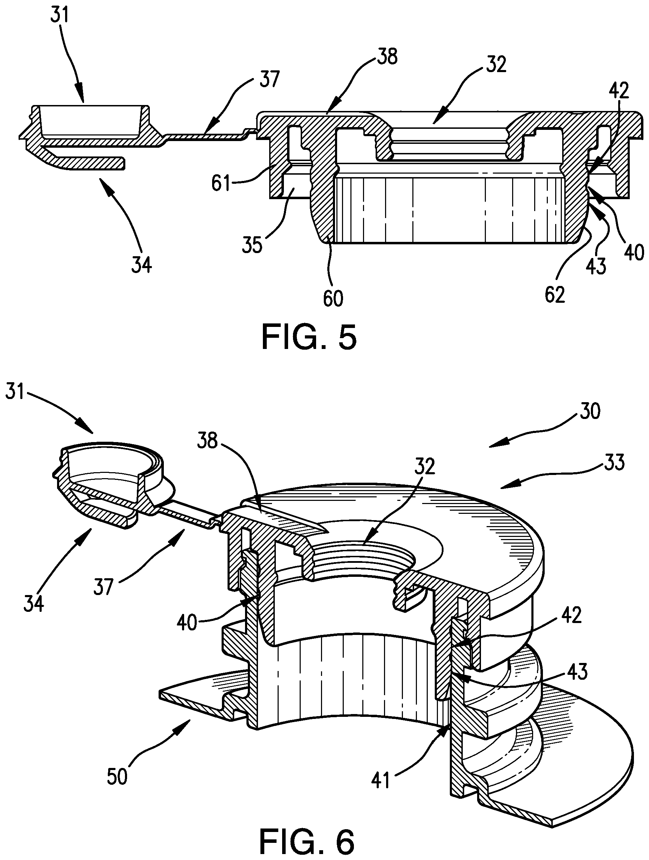

**FIG. 5** is a partial cross sectional view of the aseptic flip-cap **30.**

**FIG. 6** is a perspective of the cross-sectional view that shows the aseptic flip-cap **30** mounted on the spout **50.** The aseptic flip-cap **30** is mounted on the spout **50** with the outer U-shaped collar opening **35** creating an aseptic seal with the inner wall **41** of the spout **50.** The outer U-shaped collar opening **35** has an inner collar **60** and an outer flange **61.** The inner collar **60,** of outer U-shaped collar opening **35**, comprises at least one sealing ring or sealing bead **42** on the inner collar **60**'s outside wall **62.** The sealing ring **42** is a protrusion projecting outward from the outside wall **62** of the inner collar **60** of the outer U-shaped collar opening **35**. Because it protrudes outwardly, the sealing ring **42** exerts sufficient force on the inner wall **41** of the spout **50** to create an aseptic seal.

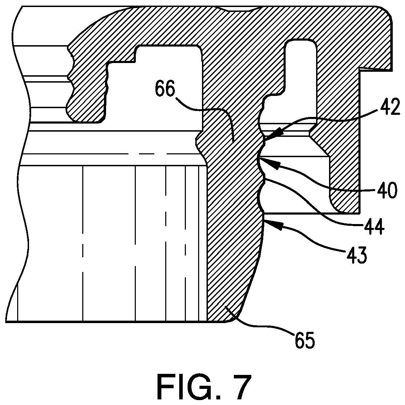

According to an embodiment of the invention shown in **FIG. 7**, more than one sealing rings **42**, **43**, and **44**, are provided on the outside wall **62** of the inner collar **60.** The surface of the protruding sealing rings **42-44** can be flat or curved. As shown in **FIG. 7**, the surface of the sealing ring **44** is flat while the surfaces of the sealing rings **42** and **43** are curved. The curvature of the protruding sealing rings can assume a flat-shape or a triangular shape with only a line contact with the inner wall **41** of the spout **50**. The curvature of the protruding sealing rings can assume shapes that are intermediate between the flat shape and the triangular shape.

In alternative embodiments not covered by the present invention, the sealing ring **42** may not protrude outside of the outside wall **62** of the inner collar **60** of the outer U-shaped collar opening **35**, and instead may be generally flush with said outside wall **62** of the inner collar **60** of the outer U-shaped collar opening **35**. Stated another way, the sealing rings **42**, **43**, and **44** may be formed by the circular depression (trough) **40** shown in **FIG. 6****.**

In still another alternative embodiment, the orientation of the inner collar **60** of the outer U-shaped collar opening **35** as compared to the spout **50** may not be vertical (the angle between the spout annular wall and the annular wall of the inner collar **60** of the outer U-shaped collar opening **35** is 180°) but instead, may vary between 155° and 205°. When the angle is greater than 180°, the proximal end of the inner collar **60** of the outer U-shaped collar opening **35** will be closer to the spout **50** than the distal end.

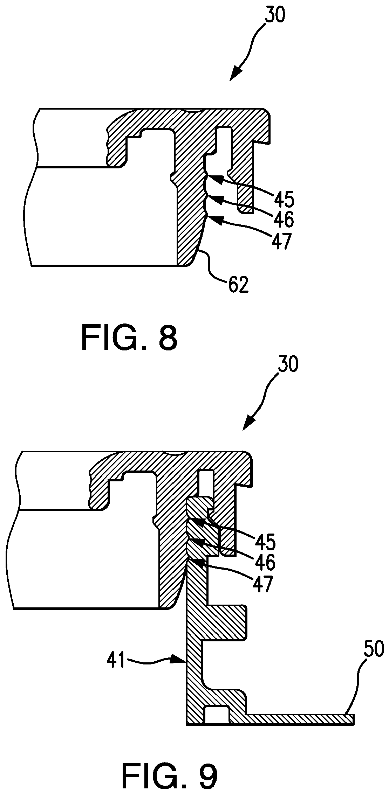

**FIG. 8** shows a magnified view of a cross section of the aseptic flip-cap **30** showing three sealing rings **45**, **46** and **47** on the outside wall **62** of the aseptic flip-cap. **FIG. 9** shows the aseptic flip-cap **30** as shown in **FIG. 8** positioned over spout **50** wherein the inner wall **41** of the spout **50** is flat and sealing rings **45**, **46** and **47** form a seal with the inner wall **41** of the spout **50.**

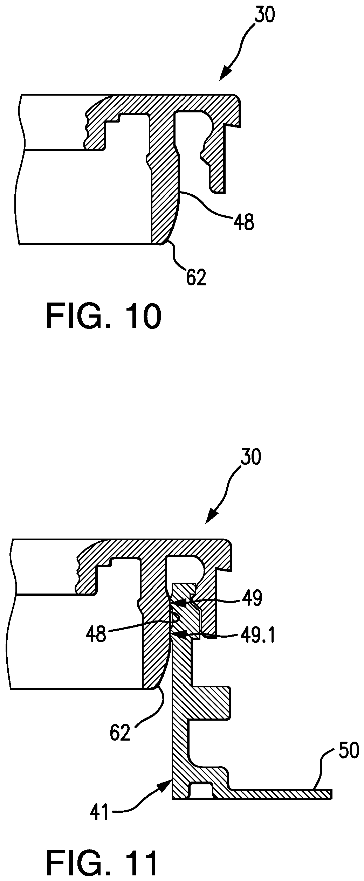

**FIG. 10** shows a magnified view of a cross section of the aseptic flip-cap **30** that does not have sealing rings on the outside wall **62** but has a flat section **48** which engages with seals on the spout as shown in **FIG. 11****.**

**FIG. 11** shows a magnified view of a cross section of the aseptic flip-cap 30 that does not have sealing rings as shown in **FIG. 10** wherein the flip-cap **30** is mounted on spout **50**. The spout **50** has sealing rings **49** and **49.1** positioned on the inner wall **41** of the spout and these rings **49** and **49.1** form a seal with the flat section **48** of the outside wall **62** of the flip-cap **30**.

In one embodiment, the aseptic seal comprises at least one seal ring. In another embodiment, the aseptic seal comprises 1, 2, 3, 4, or 5, seal rings. In an embodiment according to the invention with more than one seal rings, at least two of the seal rings have different curvatures as described above. In another embodiment not according to the invention with more than one seal ring, all seal rings have the same curvature of their surface as described above.

Spout **50** is attached to a bag not shown via the molded sealing flange **52**. Typically, the sealing flange **52** is heat sealed to the bag or container. The spout **50** has a handling flange **51** for ease of handling the fitment and the bag when attached. The spout **50** is molded from any of the aforementioned thermoplastic materials, although, polyethylene is preferred.

The aseptic flip-cap, in one embodiment is made from the same material as the spout. In another embodiment, the aseptic flip-cap is made from a material that has a higher hardness than that of the material of the spout. In yet another embodiment, the aseptic flip-cap is made from a material that has a lower hardness than that of the material of the spout. In another embodiment, the aseptic flip-cap is made from a material that has a higher toughness than that of the material of the spout. In yet another embodiment, the aseptic flip-cap is made from a material that has a lower toughness than that of the material of the spout.

The aseptic seal is advantageous in filling operation. In one embodiment, an unfilled a collapsible bag has a fitment assembly with the aseptic flip-cap mounted on the spout. The aseptic flip-cap ensures that the collapsible bag is completely sealed before the filling operation. In one embodiment, during the filling operation, the liquid to be filled into the collapsible bag is introduced into the collapsible bag under aseptic conditions. In one embodiment, the filler mechanism removes the aseptic flip-cap mounted on the spout on the unfilled collapsible bag, fills the collapsible bag and remounts or reattaches the aseptic flip-cap onto the spout. Thus the liquid now in the filled bag is under aseptic seal.

The invention as fully described above may embody other specific forms or variations without departing from its essential characteristics. In that regard, the embodiments described above are to be considered in all respects as illustrative and not restrictive, the scope of the invention being indicated by the claims rather than by the foregoing description and any and all changes which come within the claims are intended to be embraced therein.

## Claims

1. A fitment for use on a collapsible bag for dispensing of liquids and semi-solids from the bag, the fitment comprising:
(a) a spout (50) comprising a generally hollow cylindrical body having an external surface capable of mating with an aseptic flip-cap (30), the spout (50) having at one end, a base portion (52) for securing the spout to the collapsible bag;
(b) a flip-cap (30) having an outer collar (61) and an inner collar (60) with the outer collar (61) and the inner collar (60) each having an inner and outer surface, the inner surface of the outer collar (61) and the outer surface (62) of the inner collar (60) forming a cavity (35) adapted to be removably attachable to the spout (50) creating an aseptic seal with an inner wall (41) of the spout (50), the inner surface of the inner collar being capable of attaching to a cap duckbill (20), the flip-cap (30) further comprising a hollow cylinder section (32) comprising a proximal end and a distal end with each having an inner and outer surface, the hollow cylinder section (32) being fixedly attached at its distal end to the inner collar (60), the inner surface of the inner collar (60) and the outer surface of the proximal end of the cylinder section forming a cavity (36), the flip-cap (30) optionally comprising a flange fixedly attached to the outer surface of the outer collar (61);
(c) a slidably removable probe (10); and
(d) a substantially hollow cap duckbill (20) adapted to mate with the proximal end of the hollow cylinder section (32) of the flip-cap (30) and which forms a seal within the fitment that can be unsealed by insertion of the probe (10) into the fitment through the hollow cylinder section (32) of the flip-cap (30), the cap duckbill (20) having a tapered end and an ejection end, the tapered end having a dome with a reversibly sealable slit (21) capable of preventing fluid flow through the flip-cap upon removal of the probe (10) from the fitment;
**characterized in that** the outer surface (62) of said inner collar (60) comprises a first sealing ring (44) having a flat surface, and a second sealing ring (42, 43) having a curved surface, wherein said sealing rings (42, 43, 44) protrude outwardly exerting a force on the inner wall (41) of the spout (50) to create said aseptic seal such that said flip-cap is an aseptic flip-cap (30).

2. The fitment of claim 1, wherein the probe (10) comprises a generally hollow cylindrical body having a proximal end and a distal end, the distal end forming a nozzle (16) having a nipple capable of mating with a tube, the proximal end having an external surface adapted to mate with the inner surface of the distal end of the hollow cylinder section (32) of the aseptic flip-cap (30), the proximal end further having at least one indentation (14) which permits fluid flow through the probe when the dome of the cap duckbill (20) has been collapsed by the probe, the proximal end and distal end being separated by a flange (11) on the outer surface of the probe which extends around the circumference of the probe, the probe when mated with the aseptic flip-cap (30), collapsing the dome of the cap duckbill (20) thereby removing the seal between the aseptic flip-cap (30) and the cap duckbill (20) to allow fluid flow from the bag through the fitment, and the probe (10) when removed from mating with the aseptic flip-cap (30) uncollapsing the dome of cap duckbill (20) thereby resealing the seal between the aseptic flip-cap and the cap duckbill (20).

3. The fitment of claims 1 or 2, further wherein said hollow cap duckbill (20) is adapted to mate with the outer surface of the probe (10) near the proximal end of the probe (10), wherein the ejection end of said hollow cap duckbill (20) is in fluid communication with the flow from the spout (50) when the seal between the aseptic flip-cap (30) and the cap duckbill (20) has been removed.

4. The fitment of claims 1, 2, or 3, wherein the aseptic flip-cap further comprises a flip-top lid (31) joined to the aseptic flip-cap (30) by a hinge (37) which allows the flip-top lid (31) to move between a closed position on the aseptic flip-cap (30) whereby the hollow cylinder section (32) is covered and an open position away from the hollow cylinder section (32); optionally wherein the aseptic flip-cap (30) and the flip-top lid (31) have a means for locking the flip-top lid (31) in the closed position on the flip-cap (30).

5. The fitment of claim 1, wherein the surface of the second sealing ring (42, 43) has a triangular shape.

6. The fitment of claim 1, wherein the outer surface (62) of the inner collar (60) further comprises a third sealing ring.

7. The fitment of claim 1, wherein the aseptic flip-cap (30) further comprises a removable or breakable seal, which covers the distal end of the hollow cylinder section (32) of the aseptic flip-cap (30); wherein the cap duckbill (20) is optionally firmly attached to the inner surface of the inner collar (60) of the aseptic flip-cap (30).

8. The fitment of claim 1, wherein the reversibly sealable slit (21) of the cap duckbill (20) is sealed closed and when punctured by the probe (10) is opened and then reseals on removal of the probe (10).

9. The fitment of claim 4, wherein the hinge (37) of the flip-top lid (31) is recessed into the aseptic flip-cap (30) and thereby allowing the flip-top lid (31) to be recessed into a recessed area (38) in the aseptic flip-cap (30).

10. The fitment of claim 1, having a duckbill lock ring (23) in engagement with the cap duckbill (20) to prevent flow of liquid from the bag until the probe engages the cap duckbill (20).

11. The fitment of claim 1, wherein the angular orientation between a spout annular wall and an annular wall of the inner collar (60) is in the range of from about 155° to about 205°.

12. A fitment for use on a collapsible bag for dispensing of liquids and semi-solids from the bag, the fitment comprising:
(a) a spout (50) comprising a generally hollow cylindrical body having an external surface capable of mating with an aseptic flip-cap (30), the spout (50) having at one end, a base portion for securing the spout (50) to the collapsible bag;
(b) an aseptic flip-cap (30) having an outer collar and an inner collar with the outer collar (61) and the inner collar (60) each having an inner and outer surface, the inner surface of the outer collar (61) and the outer surface (62) of the inner collar (60) forming a cavity (35) adapted to be removably attachable to the spout (50) , the inner surface of the inner collar (60) being capable of attaching to a cap duckbill (20), the aseptic flip-cap (30) further comprising a hollow cylinder section (32) comprising a proximal end and a distal end with each having an inner and outer surface, the hollow cylinder section (32) being fixedly attached at its distal end to the inner collar (60), the inner surface of the inner collar (60) and the outer surface of the proximal end of the hollow cylinder section (32) forming a cavity (36), the aseptic flip-cap (30) optionally comprising a flange fixedly attached to the outer surface of the outer collar (61);
(c) a slidably removable probe (10); and
(d) a substantially hollow cap duckbill (20) adapted to mate with the proximal end of the hollow cylinder section (32) of the aseptic flip-cap (30) and which forms a seal within the fitment that can be unsealed by insertion of the probe (10) into the fitment through the hollow cylinder section (32) of the aseptic flip-cap (30), the cap duckbill (20) having a tapered end and an ejection end, the tapered end having a dome with a reversibly sealable slit (21) capable of preventing fluid flow through the aseptic flip-cap upon removal of the probe (10) from the fitment;
**characterized in that** the spout (50) comprises a first sealing ring (49) having a flat surface and a second sealing ring (49.1) having a curved surface, capable of forming a seal with the aseptic flip-cap (30), wherein the outer surface (62) of said inner collar (60) forms an aseptic seal with the sealing rings (49, 49.1) of the spout (50).

13. A process for filling an unfilled collapsible bag for dispensing of liquids and semi-solids from said collapsible bag, comprising a fitment as recited in any one of the preceding claims, comprising:
(a) introducing said unfilled collapsible bag into a filling chamber under aseptic conditions;
(b) dismounting said aseptic flip-cap (30) from said spout (50) on said unfilled collapsible bag under aseptic conditions;
(c) filling said unfilled collapsible bag with material for dispensation;
(d) re-mounting said aseptic flip-cap (30) on said spout (50); and
(e) closing the aseptic flip-cap (30).

## Patentansprüche

1. Einbauteil zur Verwendung an einem zusammenfaltbaren Beutel zur Abgabe von Flüssigkeiten oder Halbfeststoffen aus dem Beutel, wobei das Einbauteil umfasst:
a) einen Ausgießer (50), der einen allgemein hohlzylindrischen Körper umfasst, der eine Außenoberfläche hat, die dazu fähig ist, mit einem aseptischen Klappverschluss (30) zusammenzupassen, wobei der Ausgießer (50) an einem Ende einen Basisteil (52) zum Befestigen des Ausgießers am zusammenfaltbaren Beutel hat;
b) einen Klappverschluss (30), der einen äußeren Kragen (61) und einen inneren Kragen (60) hat, wobei der äußere Kragen (61) und der innere Kragen (60) jeweils eine Innenoberfläche und eine Außenoberfläche haben, wobei die Innenoberfläche des äußeren Kragens (61) und die Außenoberfläche (62) des inneren Kragens (60) einen Hohlraum (35) bilden, der dazu angepasst ist, entfernbar an dem Ausgießer (50) anbringbar zu sein, wodurch eine aseptische Abdichtung mit einer Innenwand (41) des Ausgießers (50) erzeugt wird, wobei die Innenoberfläche des inneren Kragens dazu fähig ist, an einem Entenschnabel (20) befestigt zu werden, wobei der Klappverschluss (30) ferner einen hohlzylindrischen Abschnitt (32) umfasst, der ein proximales Ende und ein distales Ende umfasst, die jeweils ein innere und eine äußere Oberfläche haben, wobei der hohlzylindrische Abschnitt (32) an seinem distalen Ende fest am inneren Kragen (60) befestigt ist, wobei die Innenoberfläche des inneren Kragens (60) und die Außenoberfläche des proximalen Endes des zylindrischen Abschnitts einen Hohlraum (36) bilden, wobei der Klappverschluss (30) wahlweise einen Flansch umfasst, der fest an der Außenoberfläche des äußeren Kragens (61) befestigt ist;
c) eine verschiebbar entfernbare Sonde (10); und
d) einen im Wesentlichen hohlen Entenschnabel (20), der dazu angepasst ist, mit dem proximalen Ende des hohlzylindrischen Abschnitts (32) des Klappverschlusses (30) zusammenzupassen, und der eine Dichtung innerhalb des Einbauteils bildet, die durch Einführen der Sonde (10) in das Einbauteil durch den hohlzylindrischen Abschnitt (32) des Klappverschlusses (30) durchbrochen werden kann, wobei der Entenschnabel (20) ein kegeliges Ende und ein Ausstoßende hat, wobei das kegelige Ende eine Wölbung mit einem umkehrbar versiegelbaren Schlitz (21) hat, der dazu fähig ist, nach Herausziehen der Sonde (10) aus dem Einbauteil einen Fluidstrom durch den Klappverschluss zu verhindern;
**dadurch gekennzeichnet, dass** die Außenoberfläche (62) des inneren Kragens (60) einen ersten Dichtungsring (44), der eine flache Oberfläche hat, und einen zweiten Dichtungsring (42, 43) umfasst, der eine gekrümmte Oberfläche hat, wobei die Dichtungsringe (42, 43, 44) nach außen vorstehen, wobei sie eine Kraft auf die Innenwand (41) des Ausgießers (50) ausüben, um die aseptische Dichtung derart zu erzeugen, dass der Klappverschluss ein aseptischer Klappverschluss (30) ist.

2. Einbauteil gemäß Anspruch 1, wobei die Sonde (10) einen allgemein hohlzylindrischen Körper umfasst, der ein proximales Ende und ein distales Ende hat, wobei das distale Ende einen Stutzen (16) bildet, der eine Düse hat, die dazu fähig ist, mit einem Rohr zusammenzupassen, wobei das proximale Ende eine Außenoberfläche hat, die dazu angepasst ist, mit der Innenoberfläche des distalen Endes des hohlzylindrischen Abschnitts (32) des aseptischen Klappverschlusses (30) zusammenzupassen, wobei das proximale Ende ferner mindestens eine Einkerbung (14) hat, die einen Fluidstrom durch die Sonde erlaubt, wenn die Wölbung des Entenschnabels (20) von der Sonde zusammengedrückt wurde, wobei das proximale Ende und das distale Ende von einem Flansch (11) auf der Außenoberfläche der Sonde getrennt werden, der sich um den Außenumfang der Sonde herum erstreckt, wobei die Sonde, wenn sie mit dem aseptischen Klappverschluss (30) zusammengesteckt ist, die Wölbung des Entenschnabels (20) zusammendrückt, wodurch die Dichtung zwischen dem aseptischen Klappverschluss (30) und dem Entenschnabel (20) aufgehoben wird, um es Fluid zu erlauben, von dem Beutel durch das Einbauteil zu strömen, und die Sonde (10), wenn sie von dem Zusammenstecken mit dem aseptischen Klappverschluss (30) entzogen wird, die Wölbung des Entenschnabels (20) wieder erstehen lässt, wodurch die Dichtung zwischen dem aseptischen Klappverschluss und dem Entenschnabel (20) wiederhergestellt wird.

3. Einbauteil gemäß Anspruch 1 oder 2, wobei ferner der hohle Entenschnabel (20) dazu angepasst ist, mit der Außenoberfläche der Sonde (10) in der Nähe des proximalen Endes des Sonde (10) zusammenzupassen, wobei das Ausstoßende des hohlen Entenschnabels (20) in Fluidkommunikation mit dem Strom von dem Ausgießer (50) ist, wenn die Dichtung zwischen dem aseptischen Klappverschluss (30) und dem Entenschnabel (20) entfernt wurde.

4. Einbauteil gemäß Anspruch 1, 2 oder 3, wobei der aseptische Klappverschluss ferner einen Klappdeckel (31) umfasst, der über ein Scharnier (37) mit dem aseptischen Klappverschluss (30) verbunden ist, das es dem Klappdeckel (31) erlaubt, zwischen einer geschlossenen Position auf dem aseptischen Klappverschluss (30), wodurch der hohlzylindrische Abschnitt (32) abgedeckt ist, und einer offenen Position bewegt zu werden, die von dem hohlzylindrischen Abschnitt (32) entfernt ist; wobei wahlweise der aseptische Klappverschluss (30) und der Klappdeckel (31) ein Mittel zum Verriegeln des Klappdeckels (31) in der geschlossenen Position auf dem Klappverschluss (30) hat.

5. Einbauteil gemäß Anspruch 1, wobei die Oberfläche des zweiten Dichtungsrings (42, 43) eine dreieckige Form hat.

6. Einbauteil gemäß Anspruch 1, wobei die Außenoberfläche (62) des inneren Kragens (60) ferner einen dritten Dichtungsring umfasst.

7. Einbauteil gemäß Anspruch 1, wobei der aseptische Klappverschluss (30) ferner eine entfernbare oder durchbrechbare Versiegelung umfasst, die das distale Ende des hohlzylindrischen Abschnitts (32) des aseptischen Klappverschlusses (30) abdeckt; wobei der Entenschnabel (20) wahlweise fest an der Innenoberfläche des inneren Kragens (60) des aseptischen Klappverschlusses (30) angebracht ist.

8. Einbauteil gemäß Anspruch 1, wobei der umkehrbar versiegelbare Schlitz (21) des Entenschnabels (20) geschlossen versiegelt ist und bei Durchstoßung durch die Sonde (10) geöffnet wird und sich bei Herausziehen der Sonde (10) wieder abdichtet.

9. Einbauteil gemäß Anspruch 4, wobei das Scharnier (37) des Klappdeckels (31) in den aseptischen Klappverschluss (30) versenkt ist, wodurch es dem Klappdeckel (31) ermöglicht wird, in einen vertieften Bereich (38) in dem aseptischen Klappverschluss (30) versenkt zu werden.

10. Einbauteil gemäß Anspruch 1, das einen Entenschnabel-Verschlusssring (23) im Eingriff mit dem Entenschnabel (20) hat, um einen Strom von Flüssigkeit von dem Beutel zu verhindern, bis die Sonde mit dem Entenschnabel (20) in Eingriff kommt.

11. Einbauteil gemäß Anspruch 1, wobei die Winkelausrichtung zwischen einer ringförmigen Wand des Ausgießers und einer ringförmigen Wand des inneren Kragens (60) in dem Bereich von ungefähr 155° bis ungefähr 205° ist.

12. Einbauteil zur Verwendung an einem zusammenfaltbaren Beutel zur Abgabe von Flüssigkeiten oder Halbfeststoffen aus dem Beutel, wobei das Einbauteil umfasst:
a) einen Ausgießer (50), der einen allgemein hohlzylindrischen Körper umfasst, der eine Außenoberfläche hat, die dazu fähig ist, mit einem aseptischen Klappverschluss (30) zusammenzupassen, wobei der Ausgießer (50) an einem Ende einen Basisteil (52) zum Befestigen des Ausgießers (50) am zusammenfaltbaren Beutel hat;
b) einen aseptischen Klappverschluss (30), der einen äußeren Kragen (61) und einen inneren Kragen (60) hat, wobei der äußere Kragen (61) und der innere Kragen (60) jeweils eine Innenoberfläche und eine Außenoberfläche haben, wobei die Innenoberfläche des äußeren Kragens (61) und die Außenoberfläche (62) des inneren Kragens (60) einen Hohlraum (35) bilden, der dazu angepasst ist, entfernbar an dem Ausgießer (50) anbringbar zu sein, wobei die Innenoberfläche des inneren Kragens (60) dazu fähig ist, an einem Entenschnabel (20) befestigt zu werden, wobei der aseptische Klappverschluss (30) ferner einen hohlzylindrischen Abschnitt (32) umfasst, der ein proximales Ende und ein distales Ende umfasst, die jeweils ein innere und eine äußere Oberfläche haben, wobei der hohlzylindrische Abschnitt (32) an seinem distalen Ende fest am inneren Kragen (60) befestigt ist, wobei die Innenoberfläche des inneren Kragens (60) und die Außenoberfläche des proximalen Endes des hohlzylindrischen Abschnitts (32) einen Hohlraum (36) bilden, wobei der aseptische Klappverschluss (30) wahlweise einen Flansch umfasst, der fest an der Außenoberfläche des äußeren Kragens (61) befestigt ist;
c) eine verschiebbar entfernbare Sonde (10); und
d) einen im Wesentlichen hohlen Entenschnabel (20), der dazu angepasst ist, mit dem proximalen Ende des hohlzylindrischen Abschnitts (32) des aseptischen Klappverschlusses (30) zusammenzupassen, und der eine Dichtung innerhalb des Einbauteils bildet, die durch Einführen der Sonde (10) in das Einbauteil durch den hohlzylindrischen Abschnitt (32) des aseptischen Klappverschlusses (30) durchbrochen werden kann, wobei der Entenschnabel (20) ein kegeliges Ende und ein Ausstoßende hat, wobei das kegelige Ende eine Wölbung mit einem umkehrbar versiegelbaren Schlitz (21) hat, der dazu fähig ist, nach Herausziehen der Sonde (10) aus dem Einbauteil einen Fluidstrom durch den aseptischen Klappverschluss zu verhindern;
**dadurch gekennzeichnet, dass** der Ausgießer (50) einen ersten Dichtungsring (49), der eine flache Oberfläche hat, und einen zweiten Dichtungsring (49.1) umfasst, der eine gekrümmte Oberfläche hat, die dazu fähig ist, mit dem aseptischen Klappverschluss (30) eine Dichtung zu bilden, wobei die Außenoberfläche (62) des inneren Kragens (60) mit den Dichtungsringen (49, 49.1) des Ausgießers (50) eine aseptische Dichtung bildet.

13. Prozess zum Füllen eines ungefüllten zusammenfaltbaren Beutels zum Abgeben von Flüssigkeiten und Halbfeststoffen von dem zusammenfaltbaren Beutel, umfassend ein Einbauteil gemäß einem der vorhergehenden Ansprüche, umfassend:
a) Einsetzen des ungefüllten zusammenfaltbaren Beutels in eine Füllkammer unter aseptischen Bedingungen;
b) Abnehmen des aseptischen Klappverschlusses (30) von dem Ausgießer (50) auf dem ungefüllten zusammenfaltbaren Beutel unter aseptischen Bedingungen;
c) Füllen des ungefüllten zusammenfaltbaren Beutels mit zur Abgabe vorgesehenem Material;
d) Wiederaufsetzen des aseptischen Klappverschlusses (30) auf den Ausgießer (50); und
e) Verschließen des aseptischen Klappverschlusses (30).

## Revendications

1. Equipement destiné à être utilisé sur un sac pliable pour la distribution de liquides et de semi-solides à partir du sac, l'équipement comprenant :
(a) un bec verseur (50) comprenant un corps cylindrique généralement creux ayant une surface externe capable de s'apparier avec un capuchon basculant aseptique (30), le bec verseur (50) comportant à une extrémité une partie de base (52) pour fixer le bec verseur au sac pliable ;
(b) un capuchon basculant (30) comportant un collier extérieur (61) et un collier intérieur (60), le collier extérieur (61) et le collier intérieur (60) présentant chacun une surface intérieure et une surface extérieure, la surface intérieure du collier extérieur (61) et la surface extérieure (62) du collier intérieur (60) formant une cavité (35) adaptée pour pouvoir être fixée de manière amovible au bec verseur (50) en créant un joint aseptique avec une paroi intérieure (41) du bec verseur (50), la surface intérieure du collier intérieur pouvant se fixer à un bec de canard de capuchon (20), le capuchon basculant (30) comprenant en outre un tronçon de cylindre creux (32) comprenant une extrémité proximale et une extrémité distale, chacune ayant une surface intérieure et une surface extérieure, le tronçon de cylindre creux (32) étant fixé de manière fixe à son extrémité distale au collier intérieur (60), la surface intérieure du collier intérieur (60) et la surface extérieure de l'extrémité proximale du tronçon de cylindre formant une cavité (36), le capuchon basculant (30) comprenant facultativement une bride fixée de manière fixe à la surface extérieure du collier extérieur (61) ;
(c) une sonde amovible de manière coulissante (10) ;
(d) un bec de canard de capuchon sensiblement creux (20) adapté pour s'apparier avec l'extrémité proximale du tronçon de cylindre creux (32) du capuchon basculant (30) et qui forme un joint d'étanchéité dans l'équipement qui peut être descellé par l'insertion de la sonde (10) ) dans l'équipement à travers le tronçon de cylindre creux (32) du capuchon basculant (30), le bec de canard de capuchon (20) présentant une extrémité effilée et une extrémité d'éjection, l'extrémité effilée ayant un dôme avec une fente pouvant être scellée de manière réversible (21) capable d'empêcher un écoulement de fluide à travers le capuchon basculant lors du retrait de la sonde (10) à partir de l'équipement ;
**caractérisé en ce que** la surface extérieure (62) dudit collier intérieur (60) comprend un premier anneau d'étanchéité (44) ayant une surface plate et un second anneau d'étanchéité (42, 43) ayant une surface incurvée, dans lequel lesdits anneaux d'étanchéité (42, 43, 44) font saillie vers l'extérieur en exerçant une force sur la paroi intérieure (41) du bec verseur (50) pour créer ledit joint d'étanchéité aseptique de telle sorte que ledit capuchon basculant soit un capuchon basculant aseptique (30).

2. Equipement selon la revendication 1, dans lequel la sonde (10) comprend un corps cylindrique généralement creux ayant une extrémité proximale et une extrémité distale, l'extrémité distale formant une buse (16) ayant un mamelon capable de s'apparier avec un tube, l'extrémité proximale ayant une surface extérieure adaptée pour s'apparier à la surface intérieure de l'extrémité distale de la section de cylindre creux (32) du capuchon basculant aseptique (30), l'extrémité proximale présentant en outre au moins une empreinte (14) qui permet un écoulement de fluide à travers le sonde lorsque le dôme du bec de canard de capuchon (20) a été applati par la sonde, les extrémités proximale et distale étant séparées par une bride (ii) sur la surface extérieure de la sonde qui s'étend autour de la circonférence de la sonde, la sonde, lorsqu'elle est appariée avec le capuchon basculant aseptique (30), aplatissant le dôme du bec de canard de capuchon (20) en enlevant ainsi le joint d'étanchéité entre le capuchon basculant aseptique (30) et le bec de canard de capuchon (20) pour permettre un écoulement de fluide à partir du sac à travers l'équipement, et la sonde (10), lorsqu'elle est retirée de l'appariement avec le capuchon basculant aseptique (30), libérant le dôme du bec de canard de capuchon (20), en rescellant ainsi le joint d'étanchéité entre le capuchon basculant aseptique et le bec de canard de capuchon (20).

3. Equipement selon la revendication 1 ou 2, dans lequel en outre ledit bec de canard de capuchon creux (20) est adapté pour s'apparier à la surface extérieure de la sonde (10) près de l'extrémité proximale de la sonde (10), dans lequel l'extrémité d'éjection dudit bec de canard de capuchon creux (20) est en communication fluidique avec l'écoulement depuis le bec verseur (50) lorsque le joint d'étanchéité entre le capuchon basculant aseptique (30) et le bec de canard de capuchon (20) a été enlevé.

4. Equipement selon les revendications 1, 2 ou 3, dans lequel le capuchon basculant aseptique comprend en outre un couvercle supérieur basculant (31) relié au capuchon basculant aseptique (30) par une articulation (37) qui permet au couvercle supérieur basculant (31) de se déplacer entre une position fermée sur le capuchon basculant aseptique (30), moyennant quoi le tronçon de cylindre creux (32) est recouvert et une position ouverte à l'opposé du tronçon de cylindre creux (32) ; facultativement dans lequel le capuchon basculant aseptique (30) et le couvercle supérieur basculant (31) ont des moyens pour verrouiller le couvercle supérieur basculant (31) dans la position fermée sur le capuchon basculant (30).

5. Equipement selon la revendication 1, dans lequel la surface du second anneau d'étanchéité (42, 43) a une forme triangulaire.

6. Equipement selon la revendication 1, dans lequel la surface extérieure (62) du collier intérieur (60) comprend en outre un troisième anneau d'étanchéité.

7. Equipement selon la revendication 1, dans lequel le capuchon basculant aseptique (30) comprend en outre un joint d'étanchéité amovible ou cassable, qui recouvre l'extrémité distale du tronçon de cylindre creux (32) du capuchon basculant aseptique (30) ; dans lequel le bec de canard de capuchon (20) est facultativement fixé fermement à la surface intérieure du collier intérieur (60) du capuchon basculant aseptique (30).

8. Equipement selon la revendication 1, dans lequel la fente (21) pouvant être scellée de manière réversible du bec de canard de capuchon (20) est fermée de manière étanche et est ouverte lorsqu'elle est perforée par la sonde (10), puis refermée après retrait de la sonde (10).

9. Equipement selon la revendication 4, dans lequel l'articulation (37) du couvercle supérieur basculant (31) est évidée dans le capuchon basculant aseptique (30), en permettant ainsi au couvercle supérieur basculant (31) de pénétrer dans une zone évidée (38) dans le capuchon basculant aseptique (30).

10. Equipement selon la revendication 1, comportant une bague de verrouillage (23) de bec de canard en prise avec le bec de canard de capuchon (20) pour empêcher un écoulement de liquide hors du sac jusqu'à ce que la sonde vienne en prise dans le bec de canard de capuchon (20).

11. Equipement selon la revendication 1, dans lequel l'orientation angulaire entre une paroi annulaire de bec verseur et une paroi annulaire du collier intérieur (60) se situe dans la plage d'environ 155° à environ 205°.

12. Equipement destiné à être utilisé sur un sac pliable pour la distribution de liquides et de semi-sol à partir du sac, l'équipement comprenant :
(a) un bec verseur (50) comprenant un corps cylindrique généralement creux ayant une surface externe capable de s'apparier avec un capuchon basculant aseptique (30), le bec verseur (50) comportant à une extrémité une partie de base (52) pour fixer le bec verseur au sac pliable ;
(b) un capuchon basculant aseptique (30) comportant un collier extérieur (61) et un collier intérieur (60), le collier extérieur (61) et le collier intérieur (60) présentant chacun une surface intérieure et une surface extérieure, la surface intérieure du collier extérieur (61) et la surface extérieure (62) du collier intérieur (60) formant une cavité (35) adaptée pour pouvoir être fixée de manière amovible au bec verseur (50), la surface intérieure du collier intérieur pouvant se fixer à un bec de canard de capuchon (20), le capuchon basculant aseptique(30) comprenant en outre un tronçon de cylindre creux (32) comprenant une extrémité proximale et une extrémité distale, chacune ayant une surface intérieure et une surface extérieure, le tronçon de cylindre creux (32) étant fixé de manière fixe à son extrémité distale au collier intérieur (60), la surface intérieure du collier intérieur (60) et la surface extérieure de l'extrémité proximale du tronçon de cylindre creux (32) formant une cavité (36), le capuchon basculant aseptique (30) comprenant facultativement une bride fixée de manière fixe à la surface extérieure du collier extérieur (61) ;
(c) une sonde amovible de manière coulissante (10) ; et
(d) un bec de canard de capuchon sensiblement creux (20) adapté pour s'apparier avec l'extrémité proximale du tronçon de cylindre creux (32) du capuchon basculant aseptique (30) et qui forme un joint d'étanchéité dans l'équipement qui peut être descellé par l'insertion de la sonde (10) ) dans l'équipement à travers le tronçon de cylindre creux (32) du capuchon basculant aseptique (30), le bec de canard de capuchon (20) présentant une extrémité effilée et une extrémité d'éjection, l'extrémité effilée ayant un dôme avec une fente pouvant être scellée de manière réversible (21) capable d'empêcher un écoulement de fluide à travers le capuchon basculant lors du retrait de la sonde (10) à partir de l'équipement ;
**caractérisé en ce que** le bec verseur (50) comprend un premier anneau d'étanchéité (49) ayant une surface plane et un second anneau d'étanchéité (49.1) ayant une surface incurvée, pouvant former un joint d'étanchéité avec le capuchon basculant aseptique (30), dans lequel la surface extérieure (62) dudit collier intérieur (60) forme un joint d'étanchéité aseptique avec les anneaux d'étanchéité (49, 49.1) du bec verseur (50).

13. Procédé de remplissage d'un sac pliable non rempli pour la distribution de liquides et de semi-solides à partir dudit sac pliable, comprenant un équipement selon l'une quelconque des revendications précédentes, comprenant les étapes consistant à :
(a) introduire ledit sac pliable non rempli dans une chambre de remplissage dans des conditions d'asepsie ;
(b) démonter ledit couvercle basculant aseptique (30) à partir dudit bec verseur (50) sur ledit sac pliable non rempli dans des conditions d'asepsie ;
(c) remplir ledit sac pliable non rempli avec un matériau destiné à une distribution ;
(d) remonter ledit capuchon basculant aseptique (30) sur ledit bec verseur (50) ; et
(e) fermer le capuchon basculant aseptique (30).
